# EUROPEAN PATENT APPLICATION

(11) **EP 2 251 216 A1**
(43) Date of publication of application: **17.11.2010**
(21) Application number: 10158750.9
(22) Date of filing: 31.03.2010
(51) Int. Cl.: B60C 25/138

(54) **Tyre mounting machine**

(30) Priority: 30.04.2009 IT MI20090750
(71) Applicant: Galbiati, Paolo, 20057 Vedano Al Lambro (MB) (IT)
(72) Inventor: Galbiati, Paolo, 20057 Vedano Al Lambro (MB) (IT)
(74) Representative: Branca, Emanuela

(57) **Abstract**

A machine for removing and fitting tyres comprises a tool-holding group (30) with two parallel tool-holding plates (33), to which a pair of upper thrusting members (34) and a pair of lower thrusting members (35) are fixedly connected on the outside, in which each thrusting member (34, 35) comprises at least one first idle frusto-conical roller (36), arranged with the smaller diameter facing towards the side (14), the upper thrusting members (34) projecting out beyond the upper edge of the plates (33) and the lower thrusting members (35) projecting out beyond the lower edge of the plates (33), and wherein tools (50, 51) for removing and fitting a tyre can be removably connected between the plates (33) through removable pins (41).

## Description

### MACHINE FOR REMOVING AND FITTING TYRES

The present invention relates to a machine for removing and fitting tyres.

Subsequent to the increasingly large use of so-called "run-flat" tyres, which allow travelling at low speeds also without compressed air, that is, with pierced tyre, an optimisation of tyre removing machines is required.

In fact, the tyre must be stiff and very hard, and so it is not easily removable and fittable from/to the rim with the current pneumatic tyre removing machines, among the other things structured for weak forces and much lighter.

The machines for removing and fitting stiff tyres must exert stronger forces for deforming the tyre and opposing the tendency to elastic return of the same.

The object of the present invention is to provide a machine for removing and fitting tyres suitable for being used with optimised performance for a wide range of different tyre sizes.

Another object of the present invention is to provide a machine for removing and fitting tyres capable of exerting strong forces through high reliability components.

Another object of the present invention is to provide a machine for removing and fitting tyres especially simple and functional, at low cost.

These objects according to the present invention are achieved by a machine for removing and fitting tyres as described in claim 1.

Further features are provided in the dependent claims.

The features and the advantages of a machine for removing and fitting tyres according to the present invention will appear more clearly from the following description, made by way of an indicative non-limiting example with reference to the annexed schematic drawings, wherein:

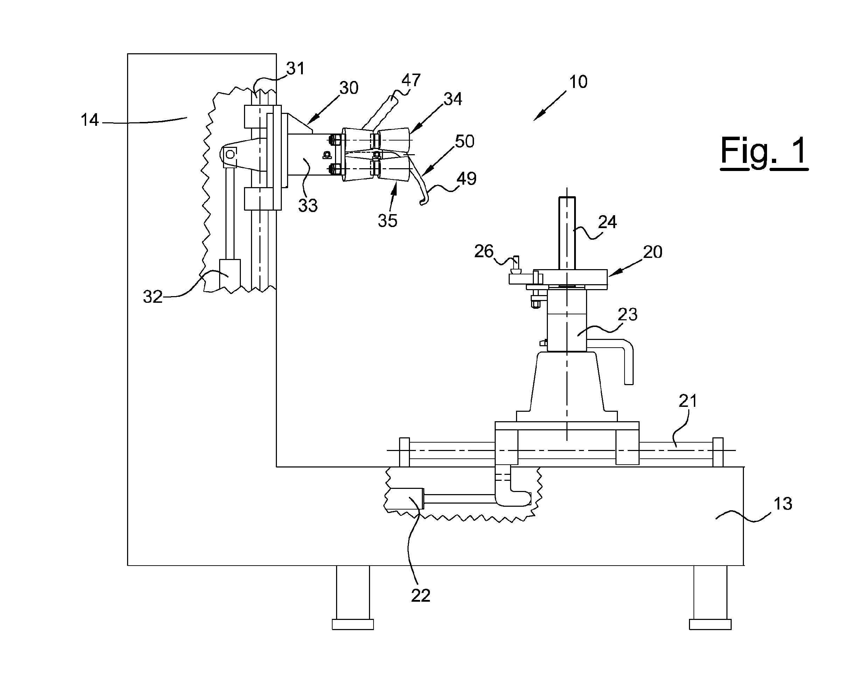

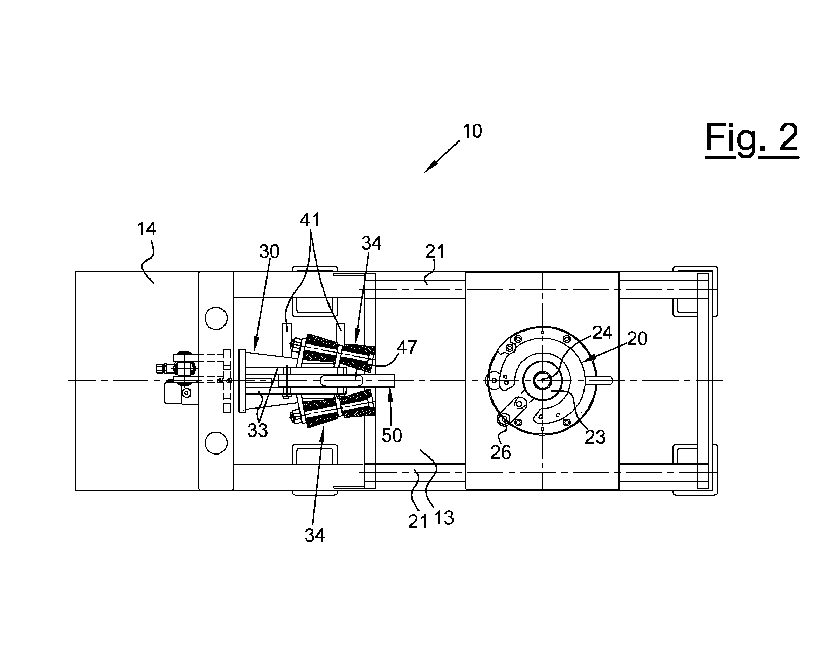

figures 1 and 2 respectively show a side elevation and a plan partially cutaway view of a machine for removing and fitting tyres according to the invention;

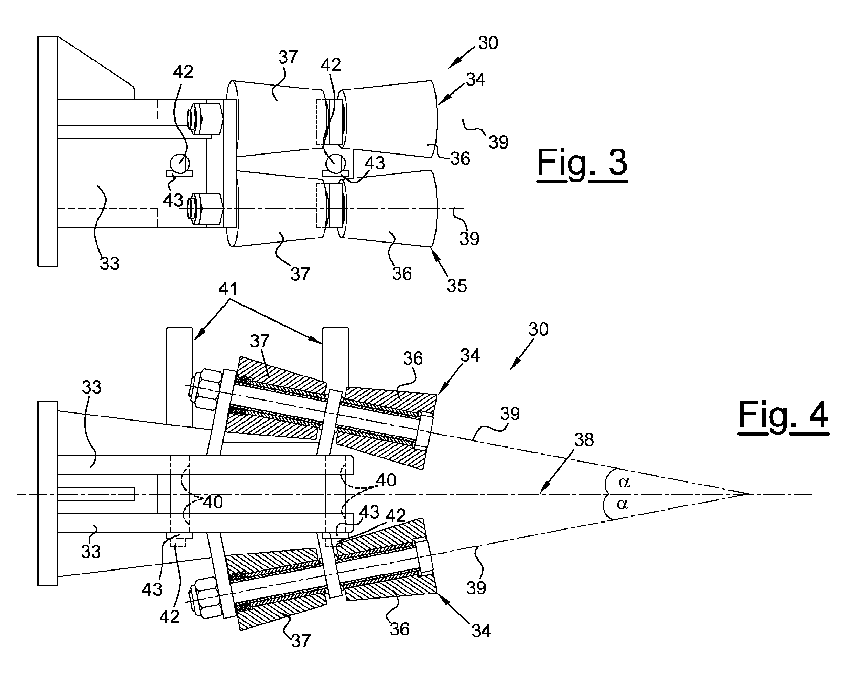

figures 3 and 4 respectively show an elevation and a plan partially cutaway view of a tool-holding group of the machine according to the invention;

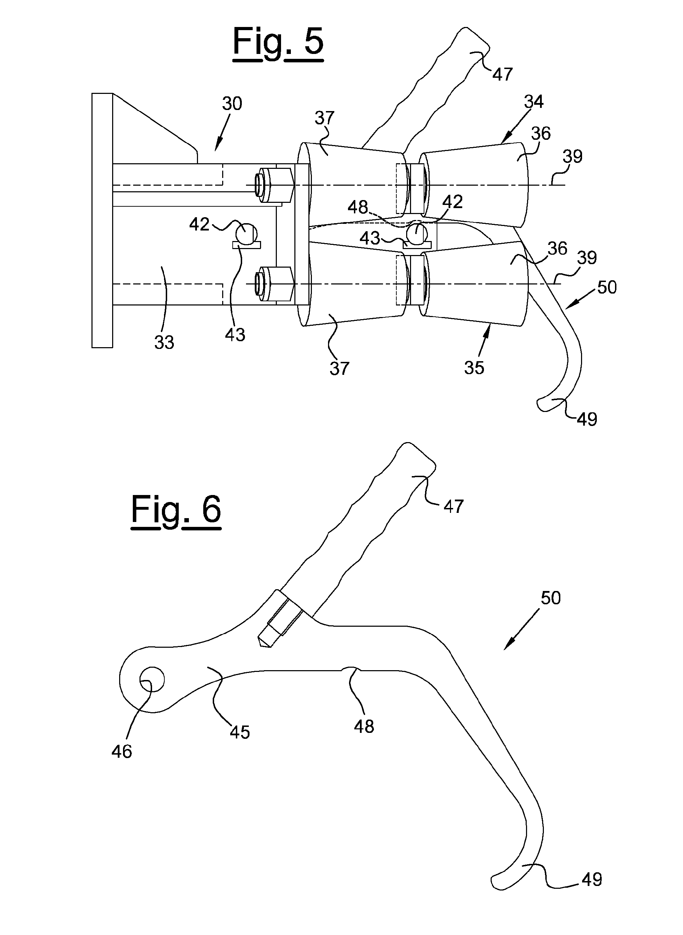

figures 5 and 6 respectively show an elevation view of the tool-holding group of figures 3 and 4 whereto a bead-lifting lever is applied as a tool, as well as a detail of the bead-lifting lever;

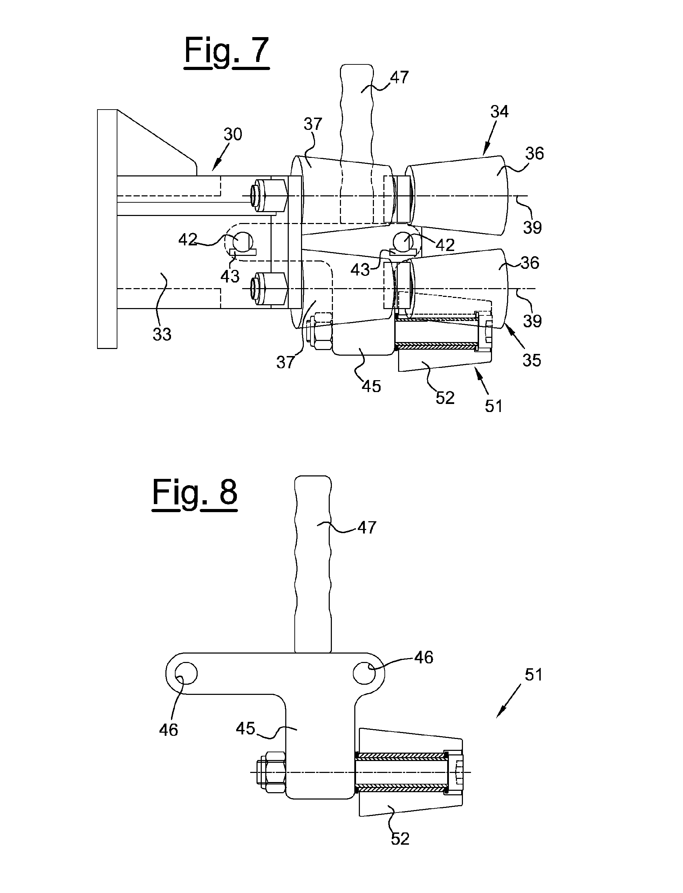

figures 7 and 8 respectively show an elevation view of the tool-holding group of figures 3 and 4 whereto a pressure roller is applied as a tool, as well as a detail of the partially cutaway pressure roller;

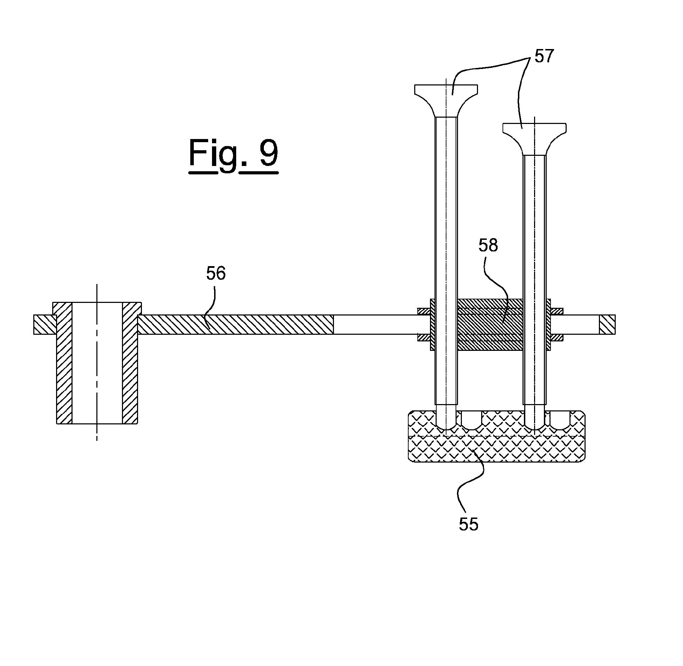

figure 9 shows a pad device constrainable to a centring shaft of the machine of figures 1 and 2.

With reference to the figures, there is shown a machine for removing and fitting tyres, globally indicated with reference numeral 10, for removing or fitting a tyre from/to a rim.

The hydraulically actuated machine 10 comprises a base 13 and a side 14 arranged orthogonal to each other.

On base 13, machine 10 is provided with a rim-holding spindle 20, with a rotation axis for example vertical, longitudinally movable in a direction orthogonal to the vertical rotation axis to be moved close towards or away from side 14.

The rim-holding spindle 20 is arranged on rectilinear guides 21 and is controlled by a linear actuator 22 in the longitudinal movement. The rim-holding spindle 20 comprises a motorised support 23, able to be coupled with the rim, a centring shaft 24 and fixing means, not shown.

In particular, the centring shaft 24 preferably comprises at least one threaded portion for the constraint with the relative fixing means, threaded as well.

In the example shown, the motorised support 23 comprises a rim driving element 26 which integrally couples with the rim and imparts the rotation thereto.

Side 14 comprises a tool-holding group 30 movable in a direction parallel to the rotation axis of the rim-holding spindle 20 for alternately moving the tools in engagement with the top or bottom sidewall of the tyre.

The tool-holding group 30 is arranged on rectilinear guides 31 and is controlled by a linear actuator 32.

The tool-holding group 30 comprises two parallel tool-holding plates 33 whereto a pair of upper thrusting members 34 and a pair of lower thrusting members 35 are fixedly connected on the outside, which protrude relative to the upper and lower edges of plates 33 to prevent plates 33 from resting on the tyre that has to be fitted or removed.

Each thrusting member 34, 35 comprises at least a first idle frusto-conical roller 36, arranged with the smaller diameter facing side 14 of the machine 10.

According to a preferred embodiment shown in the figures, each thrusting member 34, 35 comprises a second idle frusto-conical roller 37, arranged aligned with the first roller 36 with the smaller diameter facing the first roller 36.

The thrusting members 34, 35 of each upper and lower pair are equal to each other and symmetrical relative to a plane of symmetry 38 parallel to the plates and equally spaced therefrom. Moreover, they have converging rotation axes 39 and each forming an angle α smaller than 15° with the plane of symmetry 38.

In particular, the optimal angle α is about 11°, so that the rotation axes 39 of the thrusting members 34, 35 converge during the removal of a tyre towards the axis of a tyre having mean diameter relative to the maximum and minimum size of the tyres able to be processed by machine 10 according to the invention.

Plates 33 are fitted with two aligned holes 40 for inserting two removable pins 41 for fitting replaceable tools.

Pins 41 are preferably provided with a shaped end 42 for the engagement with a safety element 43, applied to one of plates 33.

The tools that may be applied to the tool-holding group 30 according to the invention may be of different shapes, both for the removal and for the fitting of a tyre on the rim, but in any case they are inserted manually in the tool-holder and actuated without the aid of complicated mechanisms.

The tools preferably comprise a support 45 provided with at least one hole 46 for the insertion of one of pins 41, with an engagement element with the tyre to be removed and/or fitted and with a handle 47 arranged on the top side.

A first tool consists of a bead-lifting lever 50, usable for the removal operations, able to be pivoted to the tool-holding group 30 through hole 46 wherein one of the two pins 41 is inserted and positionable during operation through handle 47.

The lever 50 also comprises a seat 48 for the abutment with the second pin 41 in an end stroke position, wherein hole 46 and seat 48 have the same distance between centres as holes 40 of plates 33. The engagement element with the tyre consists of a hook 49 projecting downwards relative to the tool-holding group 30.

A second tool consists of a pressure roller 51 which can be used for the fitting operations, wherein support 45 is provided with two holes 46 having the same distance between centres as holes 40 of plates 33, for the fitting on the removable pins 41. The pressure roller 51 at the bottom comprises the engagement element with the tyre, comprising an idle frusto-conical roller 52 having the larger diameter facing towards side 14 of machine 10. On the top, the support 45 is provided with handle 47.

The distance between the rotation axis of the pressure roller 52 relative to the removable pins 41 is greater than the distance between the same pins 41 and the rotation axis of idle rollers 36, 37 of the lower thrusting member 35. In fact, when applied to the tool-holding group 30, pressure roller 51 must project towards the bottom in order to be the only element interacting with the tyre.

Machine 10 according to the invention further comprises, according to a preferred embodiment, a pad device 55, integrally constrainable to the rim-holding spindle 20 and in particular to the centring shaft 24, downstream relative to the tool-holding group 30 in the rotating direction of the rim, and adapted for compressing the upper sidewall of the tyre for preventing the elastic return of the tyre to the initial position during insertion onto the rim in fitting.

The pad device 55 is connected by a support 58 to a crosspiece 56, constrainable to the centring shaft 24 so that the radial distance thereof from the centring shaft 24 is adjustable.

Threaded members 57, adapted for engaging with support 58, also allow the height adjustment of the pad device 55, so as to optimally adjust the tyre compression.

The pad device 55 preferably has the lower side inclined with an increasing height in the rotating direction for a stronger deformation of the tyre towards the pressure roller 51.

In order to carry out the bead breaking operation on the tyre from the rim, the lower sidewall is first processed and then the upper sidewall, respectively moving the tool-holding group 30 along guides 31 in a lower position and in an upper position relative to the tyre, and then moving the rim-holding spindle 20 to the right distance from the tool-holding group 30.

In fact, the pair of upper thrusting members 34 is adapted for acting on the lower sidewall of the tyre pressing it upwards when the tool-holding group 30 is in a lower working position and the pair of lower thrusting members 35 acts on the upper sidewall of the tyre pressing it downwards when the tool-holding group 30 is in an upper working position.

With the rollers resting on the lower or upper sidewall of the tyre, the bead of the tyre itself is compressed, concurrently turning the rim in order to create a gap between the bead and the seat thereof.

In order to remove the tyre from the rim, the bead-lifting lever 50 is then fitted on the tool-holding group 30 adjusting the proper position of the rim-holding spindle 20 relative to tool 50.

The bead-lifting lever 50 is inserted in the slit created between tyre and rim by a suitable pressure of the lower thrusting members 35 for hooking and lifting the bead, thus extracting it from the rim edge during the rotation.

In particular, the rotation of the assembly consisting of spindle 20, of the rim and of the tyre is started, and at the same time the tool-holding group 30 and the relative tool 50 are gradually lifted until the upper tyre bead is completely extracted from the upper edge of the rim.

Tool 50 is then removed from the tyre lifting the tool-holding group 30 again and spindle 20 is removed from side 14 to manually extract the tyre from the rim.

In order to fit the tyre on the rim, the same is manually positioned on the rim exerting a slight thrust downwards, thus inserting the lower tyre bead in the upper edge of the rim.

The pressure roller 51 is then fitted on the tool-holding group 30 adjusting the correct position of the rim-holding spindle 20 relative to tool 51 to move the tyre underneath tool 51 wherewith pressure is exerted so as to move the bead portion concerned below the rim level. The roller tool 51 is centrally applied to the tool-holding group 30, and therefore by exerting pressure on a reduced area compared to that affected by rollers 36, 37 of the two lower thrusting members 35, it facilitates the insertion of the bead in the rim, in particular with very hard tyres.

At this point, and not before, the pad device 55 is applied just downstream of the tool 51, locking it on the centring shaft 24 which rotates, together with the pad device, in perfect synchrony with the tyre.

The tyre is then suitable compressed with pad 55 to prevent the tyre bead portion downstream of tool 51 from returning above the rim edge during the rotation.

The rotation of spindle 20 is then started until all the upper tyre bead is inserted in the upper edge of the rim.

As an alternative, the insertion of the tyre on the rim may also be carried out by means of the lower thrusting member 35, instead of pressure roller 51.

The machine for removing and fitting tyres of the present invention has the advantage of being optimised for treating tyres having mean diameter compared to the range of diameters to be treated and thus of having globally optimised performance for all tyres treated.

In fact, the presence of pairs of both upper and lower thrusting members, each comprising idle rollers alternately dedicated to coming into contact with a lower or upper sidewalls of the tyres advantageously allows using idle rollers of smaller diameter compared to the cases where a same roller engages with both tyre sidewalls and must therefore have a larger diameter than its own support structure.

The idle rollers of each pair having relatively small diameter can advantageously be arranged also with a more flexible incidence angle relative to one another and therefore also with an angle of about 30°, which is the angle converging towards the axis of a tyre having diameter relative to the maximum and minimum diameter of the tyres to be treated.

The performance of the machine according to the invention is substantially even in the usage range.

Several changes and variations can be made to the machine for removing and fitting tyres thus conceived, all falling within the invention; moreover, all details can be replaced with technically equivalent elements. In the practice, the materials used as well as the sizes, can be whatever according to the technical requirements.

## Claims

1. Machine for removing and fitting tyres comprising a base (13) and a side (14), arranged perpendicular to each other, in which said base (13) carries a rim-holding spindle (20), able to move longitudinally in a direction perpendicular to a rotation axis, and said side (14) carries a tool-holding group (30), comprising at least one thrusting member, displaceable in a direction parallel to said rotation axis to allow tools alternatively to engage with a top or bottom sidewall of a tyre, **characterised in that** said tool-holding group (30) comprises two parallel tool-holding plates (33), to which a pair of upper thrusting members (34) and a pair of lower thrusting members (35) are fixedly connected on the outside, in which each thrusting member (34, 35) comprises at least one first idle frusto-conical roller (36), arranged with the smaller diameter facing towards said side (14), said upper thrusting members (34) projecting out beyond the upper edge of said plates (33) and said lower thrusting members (34) projecting out beyond the lower edge of said plates (33), and **in that** tools (50, 51) for removing and fitting a tyre can be removably connected between said plates (33) through removable pins (41).

2. Machine according to claim 1, **characterised in that** said thrusting members (34, 35) of each upper and lower pair are the same as each other and symmetrical with respect to a plane of symmetry (38) parallel to and equally spaced from said plates (33), as well as have converging rotation axes (39) and each forming an angle (α) of less than 15° with said plane of symmetry (38).

3. Machine according to claim 2, **characterised in that** said angle (α) is about 11°.

4. Machine according to any one of the previous claims, **characterised in that** each of said thrusting members (34, 35) also comprises a second idle frusto-conical roller (37), arranged aligned with said first roller (36) and having the smaller diameter facing towards said first roller (36).

5. Machine according to claim 1, **characterised in that** said plates (33) each comprise two holes (40) for the insertion of said two removable pins (41).

6. Machine according to claim 1, **characterised in that** said tools (50, 51) comprise a support (45) provided with at least one hole (46) for the insertion of one of said pins (41), with an engagement element with the tyre to be removed and/or fitted (49, 52) and with a handle (47) arranged on the top side.

7. Machine according to claim 6, **characterised in that** a first tool (50) consists of a bead-lifting lever, in which said engagement element with the tyre is a hook (49) projecting downwards, said lever (50) also comprising a seat (48) for abutment with the second pin (41) in an end stop position, in which said hole (46) and said seat (48) have the same distance between centres as the holes (40) of the plates (33).

8. Machine according to claim 6, **characterised in that** a second tool (51) consists of a pressure roller, able to be used for the fitting operations, in which said engagement element with the tyre is a frusto-conical idle roller (52) with the larger diameter facing towards said side (14) and projecting out from the bottom of said tool-holding group (30), said support (45) being provided, for assembling onto the removable pins (41), with two holes (46), having the same distance between centres as the holes (40) of the plates (33).

9. Machine according to claim 1, **characterised in that** it also comprises a pad device (55), able to be fixedly connected to the rim-holding spindle (20), suitable for compressing the upper sidewall of the tyre during insertion onto the rim in fitting, said pad device (55) being adjustable in height and in radial distance from said rotation axis of the rim-holding spindle (20).

10. Machine according to claim 1, **characterised in that** said rim-holding spindle (20) is arranged on rectilinear guides (21) and controlled by a linear actuator (22) and **in that** said tool-holding group (30) is arranged on rectilinear guides (31) and controlled by a linear actuator (32), said rim-holding spindle (20) comprising a motorised support (23), able to be coupled with said rim, and a centring shaft (24).
